# EUROPÄISCHE PATENTSCHRIFT

(11) **EP 1 777 276 B1**
(45) Veröffentlichungstag und Bekanntmachung des Hinweises auf die Patenterteilung: **29.07.2009**
(21) Anmeldenummer: 06121735.2
(22) Anmeldetag: 04.10.2006
(51) Int. Cl.: C09J 7/02, C09J 133/00

(54) **Verfahren zur Herstellung anisotroper Haftklebemassen**
Process for preparing anisotropic self-adhesive materials
Procédé de préparation des masses auto-adhésives ayant des propriétés anisotropes

(30) Priorität: 18.10.2005 DE 102005050104
(43) Veröffentlichungstag der Anmeldung: 25.04.2007
(73) Patentinhaber: tesa SE, 20253 Hamburg (DE)
(72) Erfinder: Keite-Telgenbüscher, Klaus, Dr., 22529, Hamburg (DE); Guldbrandsen, Lars, 22115, Hamburg (DE); Dietz, Bernd, 22949, Ammersbek (DE)

(56) Entgegenhaltungen:
- EP-A2- 1 361 260
- WO-A-02/34854
- WO-A-03/044116

## Beschreibung

Die Erfindung betrifft ein Verfahren zur Herstellung anisotroper Haftklebemassen unter Verwendung an sich bekannter Beschichtungsverfahren, wobei in einem ersten Schritt ein Haftkleberfilm auf einem Transportträger hergestellt wird, welcher anschließend unter gleichzeitigem Verstrecken auf ein weiteres Trägermaterial transferiert wird, sowie sie enthaltende Stanzprodukte.

Alle heute bekannten Haftklebemassen zeichnen sich durch ein mehr oder weniger ausgeprägtes Fließverhalten aus. Dieses Fließverhalten ist bei starker Ausprägung auch als kalter Fluss oder als Ausbluten eines Haftklebstoffes bekannt. Das inhärente Verhalten einer Haftklebemasse führt zu Problemen bei der Verarbeitung und Lagerung von Rollenware sowie für die Verwendung für gestanzte Materialien. So kann das Entgitterungsverhalten von selbstklebendem Stanzmaterial durch das Fließverhalten des Haftklebstoffes empfindlich gestört werden, was zu erhöhtem Ausschuss führt. Um dem gegenzuwirken, muss oftmals das Material unter besonderen Temperaturbedingungen verarbeitet werden, die maximale Maschinenausbringung kann limitiert sein, oder aber die Fehlerquote (Anteil verbliebender zu ausgegitterter Stanzlinge) erhöht sich. Ebenso sind die Lagerzeiten für die gestanzten Materialien begrenzt beziehungsweise werden besondere, in der Regel aufwändige Lagerbedingungen benötigt (beispielsweise eine Klimatisierung der Lagerräume).

Materialien können bei der Stanzung angestanzt oder durchgestanzt werden. Herkömmliche Haftklebemassen weisen für die Verwendung für Stanzmaterialien, insbesondere als Schicht aufgetragen auf ein Trägermaterial, in Hinblick auf beide Vorgehensweisen erhebliche Nachteile auf:
- Die durchgestanzten Materialien lassen sich nur kurze Zeit nach dem Stanzvorgang voneinander trennen. Die Haftklebemassen fließen nach dem Stanzvorgang wieder zusammen. Das Zusammenfließen der Haftklebemasse tritt in vielerlei Produktformen auf: Sowohl Transferklebebänder (Haftklebemasse aufgetragen auf einem Trennmaterial), doppelseitig beschichtete Materialien (beidseitige Haftklebemasse auf einem Träger, z. B. auf Folie, Papier, Vlies, Gelege oder Schaum) als auch einseitig beschichtete Materialien (einseitig Haftklebemasse auf einem Träger wie z. B. Folie, Papier, Vlies, Gelege oder Schaum) zeigen den Effekt des Zusammenfließens der Haftklebemasse nach dem Stanzvorgang. Die Stanzlinge können nicht mehr zerstörungsfrei voneinander getrennt werden.
- Insbesondere beim Anstanzen tritt, neben dem Zusammenfließen der Haftklebemasse, zusätzlich das nachfolgend beschriebene Problem auf. Beim Anstanzen von selbstklebenden Materialien wird das Trennmaterial mitangestanzt, d. h. die Stanzmesser dringen bis zu einer mehr oder weniger definierten Tiefe in das Substratmaterial (= Trennmaterial) ein. Dies ist aus technischer Sicht unumgänglich, da die Werkzeugzustellung trotz Toleranzen in den Vormaterialien sowie Prozessschwankungen noch eine sichere Durchtrennung der Kleberschicht absichern muss. Dadurch wird immer die antiadhäsiv ausgerüstete Oberfläche des Trennmaterials zerstört (in den meisten Fällen sind die Trennmaterialien silikonisiert, dies gilt aber für alle beschriebenen Trennsysteme, s. Satas, 3. Auflage, Kapitel 26 und 27). Der Kleber kann in das Substratmaterial des Trennmaterials (Papier, PET, PP, PE) hineinfließen und dort anhaften. Der Stanzling lässt sich nicht mehr problemlos vom silikonisierten Trennmaterial abziehen, da die Kanten des Stanzlings mit dem Substrat verklebt sind. In einem nachfolgenden Verarbeitungsschritt kann der Stanzling, oder das zu entfernende Matrixgitter um die Stanzlinge herum, beim Abziehen reißen. Diese Abrisse führen zu massiven Produktionsstörungen, da Anstanzprozesse hauptsächlich im kontinuierlichen rotativen Stanzverfahren durchgeführt werden.

Die beschriebenen Effekte gelten für alle Produktaufbauten wie Transferklebebänder sowie für einseitig und beidseitig beschichtete Substrate wie z. B. Folien, Vliese, Papiere, Gelege oder Schäume.

Ein Ansatz zur Verbesserung des Stanzverhaltens von Haftkleberschichten stellt die Verwendung anisotroper, d. h. orientierter Haftklebemassen dar, wie sie in DE 100 34 069 A1 oder DE 100 52 955 A1 beschrieben werden.

Die Orientierung der Makromoleküle in der Haftklebemasse spielt auch für weitere Eigenschaften von Haftklebemassen eine bedeutende Rolle. Während der Herstellung, der Weiterverarbeitung oder der späteren (mechanischen) Beanspruchung von Polymeren bzw. Polymermassen kann es zu hohen Orientierungsgraden der Makromoleküle in bevorzugte Richtungen im gesamten Polymerverband kommen. Durch die Orientierung kann es zu besonderen Eigenschaften der entsprechenden Polymere kommen. Einige Beispiele für durch den Orientierungsgrad beeinflussbare Eigenschaften sind Festigkeit bzw. Steifigkeit der Polymere bzw. der daraus hergestellten Filme, thermische Leitfähigkeit, thermische Stabilität sowie anisotropes Verhalten bezüglich der Durchlässigkeit für Gase und Flüssigkeiten. Orientierte Haftklebemassen können aber auch ein anisotropes Zug/Dehnverhalten und damit auch anisotrope Klebeeigenschaften, z. B. unter Schäl- oder Scherbeanspruchung, aufweisen. Eine wesentliche von der Orientierung der Bausteine abhängende Eigenschaft ist die Brechung des Lichtes (ausgedrückt durch den entsprechenden Brechungsindex n) bzw. die Verzögerung Delta. Dies kann daher zur Bestimmung der Orientierung eingesetzt werden. Eine weitere Methode zur Bestimmung der Orientierung insbesondere in Haftklebemassen ist der Rückschrumpf des freien Films.

Die Erhaltung der Orientierung in teilweise kristallinen Kautschuk-Haftklebemassen wurde bereits in US 5,866,249 A beschrieben. Durch die anisotropen Klebeigenschaften konnten innovative Haftklebeanwendungen definiert werden. Hier werden aber nur Naturkautschukhaftklebemassen beschrieben, deren teilweise Kristallisation durch die Orientierung zudem Voraussetzung für die beschriebenen Effekte ist und die die bekannten Nachteile gegenüber z. B. Acrylathaftklebemassen besitzen, insbesondere hinsichtlich der Alterungsstabilität. Die Herstellung der orientierten Haftkleberschichten erfolgt in einem lösemittelfreien Prozess während der Extrusionsbeschichtung. Diese Beschichtungstechnologie erfordert aber einen starken Abbau des hohen Molekulargewichts von Naturkautschuk, so dass insbesondere die kohäsiven Eigenschaften der resultierenden Haftklebemassen leiden und zusätzliche Vernetzungsprozesse erforderlich machen.

In DE 100 34 069 A1, DE 100 52 955 A1 und DE 101 57 154 A1 werden Prozesse zur Herstellung von orientierten Acrylathaftklebemassen beschrieben, die jeweils auf der Einbringung von Orientierungen durch das Beschichtungsverfahren beruhen, insbesondere durch Extrusionsbeschichtung der lösemittelfreien Haftklebemasse und der nachfolgenden Fixierung der eingebrachten Orientierungen mittels Elektronen- oder UV-Bestrahlung. Diese Verfahren sind für lösemittelhaltige Haftklebemassen nicht anwendbar, da bei der Beschichtung eingebrachte Orientierungen aufgrund der hohen Molekülbeweglichkeit unmittelbar relaxieren.

Für die verfahrenstechnische Umsetzung weist auch die Bevorzugung eines lösemittelfreien Beschichtungsverfahrens Nachteile auf. So sind aufgrund der prozessbedingt notwendigen geringen Viskositäten sehr hochmolekulare und damit sehr kohäsive Haftklebemassen nicht zu verarbeiten. Zum Erreichen hoher Scherfestigkeiten müssen somit lösemittelfrei beschichtete Haftklebemassen nach der Beschichtung vernetzt werden, wobei bevorzugt die Strahlenvernetzung eingesetzt wird.

Die Strahlenvernetzung weist dabei weitere Nachteile auf. So durchdringen Elektronenstrahlen nicht nur die Haftklebemasse, sondern auch das Trägermaterial und führen somit zu einer Schädigung des Haftklebebandes. Die UV-Vernetzung ist in ihrer Durchdringungstiefe und auf im Wesentlichen transparente Haftklebemassen beschränkt. Die Vernetzungsqualität ist bei der Strahlenvernetzung gegenüber anderen Vernetzungsmechanismen in der Regel ebenfalls nur limitiert. Weiterhin ist der apparative Aufwand insbesondere für die Elektronen-Bestrahlung hoch.

In EP 0 622 127 A1 ist ein Verfahren zur Herstellung dünner Haftkleberfilme unter Verwendung des Schmelzemischens beschrieben, mit dem der Film in seiner Dicke reduziert werden soll. Die Verstreckung des Films dient ausschließlich einer Dickenreduzierung.

Aufgabe der Erfindung ist es, ein Verfahren zur Herstellung orientierter Haftklebemassen hoher Anisotropie zur Verfügung zu stellen, welches universell für alle Beschichtungsverfahren einsetzbar ist und insbesondere auch die Herstellung anisotroper Haftklebemassen aus Lösung, Dispersion oder Emulsion gestattet. Die Haftklebemassen sollen eine hinreichende Lebensdauer des anisotropen Zustands besitzen und durch eine hohe Anisotropie günstige Eigenschaften bezüglich ihrer Verwendung als Haftklebemassen besitzen, insbesondere bezüglich ihrer Klebeigenschaften und bei der Herstellung von Stanzprodukten, indem die geschilderten Nachteile des Standes der Technik vermieden oder aber zumindest erheblich vermindert werden.

Die Aufgabe wird gemäß den Ansprüchen gelöst. Die Unteransprüche betreffen Vorzugsvarianten des Verfahrens. Das erfindungsgemäße Verfahren umfasst folgende Schritte:
- Herstellung eines Haftkleberfilms auf einem Transportträger und
- Transferierung des Haftkleberfilms auf ein weiteres, zweites Trägermaterial unter gleichzeitigem Verstrecken des Haftkleberfilms, wobei die Verstreckung (Dehnung) mindestens 10% beträgt.

Das erfindungsgemäße Verfahren gestattet in einer bevorzugten Ausführung die Entkopplung von Beschichtung und das Einbringen von Anisotropie (Orientierungen). Dadurch ist es mit dem erfinderischen Verfahren möglich, alle dem Fachmann bekannten Haftklebemassen sowie alle an sich bekannten Beschichtungsverfahren zu verwenden.

Das erfindungsgemäße Verfahren hat dabei den großen Vorteil, insbesondere auch Haftklebemassen, die aus Lösung, Dispersion oder Emulsion beschichtet werden, mit anisotropen Eigenschaften versehen zu können. Bevorzugt ist, dass der Haftkleberfilm auf dem Transportträger vor dem Transferieren lösemittelfrei ist. Der Begriff "lösemittelfrei" ist hier so zu verstehen, dass ein in der Heftklebemasse eventuell vorhandenes Löse- oder Dispergiermedium zumindest bis auf einen geringen Rest von weniger als 10 Gew-% reduziert ist. Der o.g. Vorteil gilt auch für Haftklebemassen, die während der Beschichtung noch als Komposition aus Monomeren und/oder Oligomeren und/oder niedrigviskosen Polymeren mit einem Molekulargewicht von weniger als 100.000 g/mol vorliegen und erst nach der Beschichtung eine chemische Reaktion durchlaufen, die z. B. zu einer Polymerisation, einer Kettenverlängerung oder -verzweigung, einer Vernetzung oder einer Kombination solchartiger Mechanismen führt.

Sowohl während der Herstellung, als auch während einer Weiterverarbeitung oder der späteren Beanspruchung von Polymeren beziehungsweise von Polymermassen können hohe Orientierungsgrade der Makromoleküle in bevorzugte Richtungen im gesamten Polymerverband ausgebildet werden. Diese Orientierung kann erfindungsgemäß gezielt herbeigeführt werden und gestattet die Steuerung und Verbesserung der Eigenschaften der entsprechenden Polymere in Hinblick auf gewünschte spezielle Verwendungen.

Anisotrop orientierte Haftklebemassen besitzen die Tendenz, sich nach einer Streckung in eine vorgegebene Richtung durch das 'entropieelastische Verhalten' in den Ausgangszustand zurückzubewegen. Um die durch die Orientierung bewirkten Eigenschaften hinreichend auszuprägen, beträgt in einer bevorzugten Ausgestaltung des erfindungsgemäßen Verfahrens die Dehnung während des Verstreckens mehr als 10 %, bevorzugt mehr als 30 %. Dadurch entstehen Produkte, deren Rückschrumpf über eine Bestimmung nach Test A (Rückschrumpfmessung im freien Film) mindestens 3% beträgt. In einer weiteren Ausgestaltung des erfinderischen Verfahrens werden bevorzugt Dehnungen größer 70 % erzeugt, was zu Produkten mit einem Rückschrumpf von mindestens 30 % führt.

Solche erfindungsgemäß anisotrop orientierten Haftklebemassen zeigen als Schicht nach Stanz- und/oder Schneidvorgängen eine Rückstellung der Haftklebeschicht an der Schneid- und Stanzkante (bevorzugt in Verstreckungsrichtung), welche für das Ausstanzen nicht wieder zusammenfließender Stanzformen genutzt werden kann. Dies umso besser, je mehr die Stanzlingsgeometrie Trennlinien quer zur Verstreckungsrichtung der Haftklebemasse aufweist. Auch z.B. die Perforierung von klebenden Materialien quer zur Bahnrichtung - etwa zur Verbesserung des Abtrenn- oder Reißverhalten - kann somit erheblich verbessert werden.

Erfindungsgemäß sind prinzipiell alle Haftklebemassen geeignet, beispielsweise solche auf Basis von Natur- und Synthesekautschuken wie Isopren, Butylkautschuk, Neopren, Butadien-Acrylnitril, Styrol-Butadien-Styrol- und Styrol-Isopren-Styrol-Copolymerisaten, ferner auf Basis von linearen Polyestern und Copolyestern, Polyurethanen, Polysiloxanelastomeren und Polyolefinen, insbesondere auch auf Basis von Acrylaten. Eine vorteilhafte Weiterentwicklung verwendet in erfinderischem Sinne eine Haftklebemasse, welche zu mindestens 50 Gew.-% auf zumindest einem acrylischen Monomer aus der Gruppe der Verbindungen der folgenden allgemeinen Formel basiert: 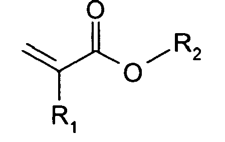 wobei R₁ gleich H oder ein CH₃-Rest ist und R₂ gleich H ist oder aus der Gruppe der gesättigten, unverzweigten oder verzweigten, substituierten oder nicht-substituierten C₁-bis C₃₀-Alkylresten gewählt ist.

Als nicht ausschließliche Beispiele für Alkylgruppen, welche für den Rest R₂ in bevorzugter Weise Anwendung finden können, seien im Folgenden genannt Butyl-, Pentyl-, Hexyl-, Heptyl-, Octyl-, Isooctyl-, 2-Methylheptyl-, 2-Ethylhexyl-, Nonyl-, Decyl-, Dodecyl-, Lauryl-, oder Stearyl(meth)acrylat oder (Meth)acrylsäure.

Weiterhin verläuft das Verfahren ausgezeichnet bei erfinderischer Verwendung einer Haftklebemasse, welche zu bis zu 50 Gew.-% auf Comonomere in Form von Vinylverbindungen basiert, insbesondere auf eine oder mehrere Vinylverbindungen gewählt aus der folgenden Gruppe:

Vinylester, Vinylhalogenide, Vinylidenhalogenide, Nitrile ethylenisch ungesättigter Kohlenwasserstoffe.

Im Sinne der Erfindung fallen auch Acrylverbindungen mit funktionellen Gruppen unter die Bezeichnung "Vinylverbindung". Solche funktionelle Gruppen enthaltenden Vinylverbindungen sind Maleinsäureanhydrid, Styrol, Styrol-Verbindungen, Vinylacetat, (Meth)acrylamide, N-substituierte (Meth)acrylamide, beta -Acryloyloxypropionsäure, Vinylessigsäure, Fumarsäure, Crotonsäure, Aconitsäure, Dimethylacrylsäure, Trichloracrylsäure, Itaconsäure, Vinylacetat, Hydroxyalkyl(meth)acrylat, aminogruppenhaltige (Meth)acrylate, hydroxygruppenhaltige (Meth)acrylate, besonders bevorzugt 2-Hydroxyethyl(meth)acrylat, 2-Hydroxypropyl-(meth)acrylat, und/oder 4-Hydroxybutyl(meth)acrylat und mit Doppelbindung funktionalisierte Photoinitiatoren; die vorstehende Aufzählung ist nur beispielhaft und nicht abschließend.

Für die Haftklebemassen ist es besonders vorteilhaft, wenn die Zusammensetzung der entsprechenden Monomere derart gewählt wird, dass die resultierenden Klebemassen entsprechend D. Satas [Handbook of Pressure Sensitive Adhesive Technology, 1989, Verlag VAN NOSTRAND REINHOLD, New York] haftklebende Eigenschaften besitzen. Hierfür sollte die Glasübergangstemperatur einer Acrylathaftklebemasse zum Beispiel unterhalb 25 °C liegen.

Bevorzugt werden Haftklebemassen eingesetzt, bei denen das mittlere Molekulargewicht der Haftklebemasse mindestens 650.000 g/mol beträgt. Das gilt auch für Haftklebemassen, die während der Beschichtung noch als Komposition aus Monomeren und/oder Oligomeren und/oder niedrigviskosen Polymeren mit einem Molekulargewicht von weniger als 100.000 g/mol vorliegen und erst nach der Beschichtung eine chemische Reaktion durchlaufen, die z. B. zu einer Polymerisation, einer Kettenverlängerung oder -verzweigung, einer Vernetzung oder einer Kombination solchartiger Mechanismen führt.

Die Bereitstellung der für das erfinderische Verfahren herangezogenen Haftklebemassen, insbesondere die vorstehend als vorteilhaft ausgelobten Polyacrylathaftklebemassen ist dem Fachmann bekannt. Sie werden bevorzugt durch eine radikalisch initiierte Polymerisation hergestellt.

Die freie radikalische Polymerisation kann in Gegenwart eines organischen Lösungsmittels oder in Gegenwart von Wasser oder in Gemischen aus organischen Lösungsmitteln und Wasser oder in Substanz durchgeführt werden. Bevorzugt wird so wenig Lösungsmittel wie möglich eingesetzt. Die Polymerisationszeit beträgt - je nach Umsatz und Temperatur - zwischen 6 und 48 h.

Bei der Lösungsmittelpolymerisation werden als Lösemittel vorzugsweise Ester gesättigter Carbonsäuren (wie Ethylacetat), aliphatische Kohlenwasserstoffe (wie n-Hexan oder n-Heptan), Ketone (wie Aceton oder Methylethylketon), Siedegrenzbenzin oder Gemische dieser Lösungsmittel verwendet. Für die Polymerisation in wässrigen Medien bzw. Gemischen aus organischen und wässrigen Lösungsmitteln werden zur Polymerisation bevorzugt die dem Fachmann zu diesem Zwecke bekannten Emulgatoren und Stabilisatoren zugesetzt. Als Polymerisationsinitiatoren werden übliche radikalbildende Verbindungen wie beispielsweise Peroxide, Azoverbindungen und Peroxosulfate eingesetzt. Auch Initiatorgemische können verwendet werden. Bei der Polymerisation können weitere Regler zur Molekulargewichtssenkung und Verringerung der Polydispersität eingesetzt werden. Als so genannte Polymerisationsregler können beispielsweise Alkohole und Ether verwendet werden. Das Molekulargewicht der Acrylathaftklebemassen liegt bevorzugt zwischen 650.000 und 2.000.000 g/mol, mehr bevorzugt zwischen 700.000 und 1.000.000 g/mol.

In einer Verfahrensvariante wird die Polymerisation in Polymerisationsreaktoren durchgeführt, die im Allgemeinen mit einem Rührer, mehreren Zulaufgefäßen, Rückflusskühler, Heizung und Kühlung versehen sind und für das Arbeiten unter N₂-Atmosphäre und Überdruck ausgerüstet sind.

Eine andere vorteilhafte Verfahrensvariante für Polyacrylathaftklebemassen ist die anionische Polymerisation. Hier werden als Reaktionsmedium bevorzugt inerte Lösungsmittel verwendet, wie z. B. aliphatische und cycloaliphatische Kohlenwasserstoffe, oder auch aromatische Kohlenwasserstoffe.

Das lebende Polymer wird in diesem Fall im Allgemeinen durch die Struktur PL(A)-Me repräsentiert, wobei Me ein Metall der Gruppe I, wie z. B. Lithium, Natrium oder Kalium, und PL(A) ein wachsender Polymerblock aus den Monomeren A ist. Die Molmasse des herzustellenden Polymers wird durch das Verhältnis von Initiatorkonzentration zu Monomerkonzentration kontrolliert. Als geeignete Polymerisationsinitiatoren eignen sich z. B. n-Propyllithium, n-Butyllithium, sec-Butyllithium, 2-Naphthyllithium, Cyclohexyllithium oder Octyllithium, wobei diese Aufzählung nicht den Anspruch auf Vollständigkeit besitzt. Ferner sind Initiatoren auf Basis von Samarium-Komplexen zur Polymerisation von Acrylaten bekannt (Macromolecules, 1995, 28, 7886) und hier einsetzbar.

Weiterhin lassen sich auch difunktionelle Initiatoren einsetzen, wie beispielsweise 1,1,4,4-Tetraphenyl-1,4-dilithiobutan oder 1,1,4,4-Tetraphenyl-1,4-dilithioisobutan. Coinitiatoren lassen sich ebenfalls einsetzen. Geeignete Coinitiatoren sind unter anderem Lithiumhalogenide, Alkalimetallalkoxide oder Alkylaluminium-Verbindungen. In einer sehr bevorzugten Version sind die Liganden und Coinitiatoren so gewählt, dass Acrylatmonomere, wie z. B. n-Butylacrylat und 2-Ethylhexylacrylat, direkt polymerisiert werden können und nicht im Polymer durch eine Umesterung mit dem entsprechenden Alkohol generiert werden müssen.

Zur Herstellung von Polyacrylathaftklebemassen mit einer engen Molekulargewichtsverteilung eignen sich auch kontrollierte radikalische Polymerisationsmethoden wie z. B. RAFT, NMRP oder ATRP. Entsprechende Details sind in DE 101 57 154 A1 ausgeführt und sollen hierüber eingebunden sein.

Die vorstehenden Auflistungen dienen nur als Beispiele für die jeweiligen Verbindungsgruppen und besitzen keinen Anspruch auf Vollständigkeit.

Nach der Polymerisation in Lösemittel kann das Polymerisationsmedium unter vermindertem Druck entfernt werden, wobei dieser Vorgang bei erhöhten Temperaturen, beispielsweise im Bereich von 80 bis 150 °C durchgeführt wird. Die Polymere können dann in lösemittelfreiem Zustand, insbesondere z. B. als Schmelzhaftkleber, eingesetzt werden. In manchen Fällen ist es auch von Vorteil, die erfindungsgemäßen Polymere in Substanz herzustellen.

Zur Herstellung der Acrylathaftklebemassen können die Polymere in üblicher Weise modifiziert werden. Beispielsweise können klebrigmachende Harze, wie Terpen-, Terpenphenol-, C5-, C9-, C5/C9- Kohlenwasserstoff-, Pinen-, Inden- oder Kolophoniumharze auch in Kombination miteinander zugesetzt werden. Weiterhin können auch Weichmacher, verschiedene Füllstoffe (z. B. Fasern, Ruß, Zinkoxid, Titandioxid, Mikrovollkugeln, Voll- oder Hohlglaskugeln, Kieselsäure, Silikaten, Kreide, blockierungsfreie Isocyanate etc.), Alterungsschutzmittel, Lichtschutzmittel, Ozonschutzmittel, Fettsäuren, Weichmacher, Keimbildner, Blähmittel und/oder Beschleuniger als Zusätze verwendet werden. Zusätzlich können Vernetzer und Promotoren zur Vernetzung beigemischt werden. Geeignete Vernetzer für die Elektronenstrahlvernetzung sind beispielsweise bi- oder multifunktionelle Acrylate, bi- oder multifunktionelle Isocyanate oder bi- oder multifunktionelle Epoxide.

Die vorstehenden Auflistungen dienen wie auch alle nachfolgenden nur als Beispiele für die jeweiligen Verbindungsgruppen und besitzen keinen Anspruch auf Vollständigkeit.

Als Beschichtungsverfahren können entsprechend der Ausführung der verwendeten Haftklebemasse alle dem Fachmann geläufigen Beschichtungsverfahren verwendet werden. Entsprechende Verfahren sind im "Handbook of Pressure Sensitive Adhesive Technology" von Donatas Satas (van Nostrand, 1989) dokumentiert und sollen hierüber eingebunden sein. Insbesondere können sowohl Beschichtungsverfahren, die das Vorhandensein eines Löse- oder Dispergiermittels zur Viskositätsanpassung voraussetzen, wie auch lösemittelfreie Verfahren verwendet werden.

Das erfindungsgemäß Verfahren ist insbesondere dadurch gekennzeichnet, dass die Verstreckung bevorzugt durch Erzeugen einer Geschwindigkeitsdifferenz beim Haftkleberfilmtransfer vom Transportmaterial auf das weitere (zweite) Trägermaterial erfolgt, wobei die Geschwindigkeit erhöht wird. In einer bevorzugten Ausgestaltung werden während des Transfers Transportträger und das zweite Trägermaterial von zwei sich gegenüberliegenden und sich mit unterschiedlichen Geschwindigkeiten bewegenden Oberflächen geführt, vorzugsweise von zwei Walzen, die mit unterschiedlicher Umfangsgeschwindigkeit rotieren, wobei die Geschwindigkeit der zweiten Oberfläche um mindestens 10% erhöht ist.

Bevorzugt wird das Verfahren so geführt, dass der Abstand der genannten Oberflächen so gewählt wird, dass er mindestens der Summe der Dicken von Transportträger, Haftklebemasse und zweitem Trägermaterial entspricht, vorzugsweise jedoch größer ist.

Zur Verbesserung der Anisotropie kann die Haftklebemasse bereits vor dem Transferieren vernetzt werden, in einer weiteren bevorzugten Ausführung des erfindungsgemäßen Verfahrens wird die Haftklebemasse nach dem Transferieren und Verstrecken vernetzt.

Es werden Haftklebemassen erzielt, die ein Rückschrumpfverhalten aufweisen, das gemäß Rückschrumpfmessung im freien Film mindestens 3 % beträgt, vorzugsweise mindestens 30 %, besonders bevorzugt mindestens 50%.

Als Transportträger wird bevorzugt ein Trennträger oder ein Maschinenelement unter Anwendung eines Flüssigkeitsfilms eingesetzt. Das weitere zweite Trägermaterial ist bevorzugt aus der Gruppe der metallischen oder polymeren Trägerfolien, der Papiere, der textilen Flächengebilde oder der Schäume oder ebenfalls ein Trennträger.

Als Trennträger werden vorzugsweise antiadhäsive oder antiadhäsiv ausgerüstete Papiere oder Folien eingesetzt. Dabei werden insbesondere für einen kontinuierlichen Beschichtungs- und Transferprozess hohe Anforderungen an die Materialdicke, die Dickenkonstanz (geringe Toleranzen) und Planlage (Dimensionsstabilität) gestellt. Als Papiere werden hochverdichtete Glassin-Papiere, Soft-Calendered-Papiere, Machine-Finished-Papiere, gestrichene (Clay Coated) Papiere und polymerbeschichtete (im Wesentlichen Polyolefine) Papiere bevorzugt eingesetzt. Als Folienmaterialien sind alle bekannten Thermoplaste wie Polyolefine, Polyether, Polyester, Vinylpolymere und Polyamide verwendbar, bevorzugt werden PET, PI, PP und PE eingesetzt.

Als Trennsysteme finden Silikone, Paraffine, Wachse, Fluorpolymere (z. B. PTFE, PVDF), Polyimid oder Polyolefine (PE, PP) Verwendung. Aber auch andere Trennsysteme wie z. B. auf der Basis von Sol-Gel-Materialien können verwendet werden.

In einer vorteilhaften Ausführung wird der antiadhäsive Effekt der Beschichtung des Transportträgers (Hilfsträgers) durch eine regelmäßige oder unregelmäßige raue Mikrostruktur des Hilfsträgermaterials hergestellt oder unterstützt.

In einer bevorzugten Ausführung des Verfahrens wird ein Trennträger eingesetzt, der mehrfach verwendet kann. Dies kann diskontinuierlich durch Aufwickeln des Trennträgers nach dem Transferieren der Haftklebemasse auf das zweite Trägermaterial erfolgen oder bevorzugt kontinuierlich durch Ausführung des Trennträgers als umlaufende Bahn oder als Oberfläche einer Walze. Das hat den Vorteil, dass die Kosten des Verfahrens erheblich reduziert werden können.

Bevorzugt, insbesondere für umlaufende Bahnen oder Walzenoberflächen, ist die Belegung der Oberfläche mit einem eine antiadhäsive Wirkung unterstützenden oder hervorrufenden Flüssigkeitsfilm.

Die Haftklebemasse wird während des Verstreckvorgangs vom Transportträger auf das zweite Trägermaterial übertragen, was einseitig oder bevorzugt auch beidseitig erfolgen kann.

Als zweites Trägermaterial sind je nach Anwendungswunsch bevorzugt Metallfolien oder Polymerfolien, wie z. B. BOPP oder MOPP, PET, PVC, oder Papiere oder textile Flächengebilde wie Gewebe, Gestricke, Gelege oder Vliese geeignet. Weiterhin kommen auch Schäume (z. B. PUR, PE, PE/EVA, EPDM, PP, PE, Silikon) oder wiederum ein Trennträger, z. B. aus der Gruppe der Trennpapiere (Glassine Papiere, Kraft Papiere, polyolefinisch beschichtete Papiere) oder Trennfolien (Metalle, PET, PP oder PE oder Kombinationen aus diesen Materialien), als Beschichtungssubstrate zum Einsatz. Bei Verwendung eines weiteren Trennträgers sollte beachtet werden, dass es vorteilhaft ist, wenn die Trennkraft des Haftkleberfilms vom zweiten Trennträger größer ist als diejenige vom ersten Trennträger. Darüber hinaus können alle bereits für den ersten Trennträger beschriebenen Materialien und Ausführungen verwendet werden.

Die Versteckung erfolgt in einer bevorzugten Ausführung der Erfindung durch Einstellen einer Geschwindigkeitsdifferenz zwischen dem den Haftkleber der Transferzone zuführenden Transportträger und dem den Haftkleberfilm übernehmenden zweiten Trägermaterial. Dabei liegt die Geschwindigkeit des zweiten Trägermaterials bevorzugt 10 % oder mehr, besonders bevorzugt 30 % oder mehr über derjenigen des Trennträgers, was entsprechend große Verstreckgrade induziert.

In einer bevorzugten Ausführung des Verfahrens werden während des Transfers Transportträger und zweites Trägermaterial von zwei sich gegenüberliegenden, sich mit unterschiedlichen Geschwindigkeiten bewegenden Oberflächen, insbesondere von zwei Walzen, die mit unterschiedlicher Umfangsgeschwindigkeit rotieren, geführt. Zur leichteren Erzielung einer erfindungsgemäßen hohen Anisotropie wird vorzugsweise der Abstand der genannten Oberflächen so gewählt, dass er nicht kleiner ist als die Summe der Dicken von Trennträger, Haftklebemasse und zweitem Trägermaterial. Mit sich vergrößerndem Abstand kann dadurch kurzzeitig ein freier Haftklebemassenfilm erzeugt werden, der leicht verstreckt werden kann.

Das erfindungsgemäße Verfahren wird anhand der Fig. 1, 2, 3a, 3b, 3c und 3d nachstehend erläutert: Es zeigt:
- Fig. 1: eine Anordnung zur Verfahrensdurchführung,
- Fig. 2: eine weitere Anordnung zur Verfahrensdurchführung
- Fig. 3a, 3b, 3c, 3d: einen Stanzling mit Rückstellverhalten der Klebemasse.

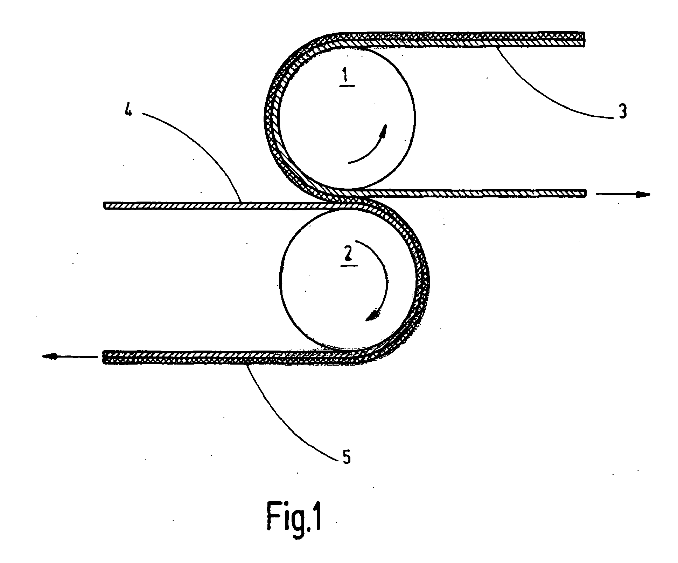

Eine bevorzugte Anordnung ist beispielhaft in Fig. 1 dargestellt.

### Dabei bedeuten:

(1) erste Transferwalze
(2) zweite Transferwalze
(3) Transportträger mit Haftkleberfilm
(4) zweites Trägermaterial
(5) zweites Trägermaterial mit verstrecktem Haftkleberfilm

In einer vorteilhaften Verfahrensvariante wird die Haftklebemasse nach dem Beschichten und vor dem Transferieren vernetzt. Ein höherer Vernetzungsgrad bewirkt dabei eine geringere Relaxation der eingebrachten Orientierungen.

Vorzugsweise weist die Haftklebemasse einen Vernetzungsgrad auf, der einem Gelwert von mindestens 35 %, insbesondere von mindestens 60 % entspricht. Dabei wird vorliegend als Gelwert das Verhältnis von nicht in Toluol löslicher Klebstoffkomponente zu löslicher Klebstoffkomponente definiert. In einer bevorzugten Verfahrensvariante werden die Haftklebemassen mit aktinischer Strahlung vernetzt, wie z. B. UV- oder Elektronenstrahlen.

Zur Verringerung der erforderlichen Dosis können der Haftklebemasse Vernetzer und/oder Promotoren zur Vernetzung beigemischt werden, insbesondere durch Elektronenstrahlen oder thermisch anregbare Vernetzer und/oder Promotoren. Geeignete Vernetzer für die Elektronenstrahlvernetzung sind bi- oder multifunktionelle Acrylate oder Methacrylate.

Für die Vernetzung mit UV-Licht können den Haftklebemassen UV-absorbierende Photoinitiatoren zugesetzt werden. Nützliche Photoinitiatoren, welche sehr gut zu verwenden sind, sind Benzoinether, wie z. B. Benzoinmethylether und Benzoinisopropylether, substituierte Acetophenone, wie z. B. 2,2-Diethoxyacetophenon (erhältlich als Irgacure 651 TM von Fa. Ciba Geigy TM ), 2,2-Dimethoxy-2-phenyl-1-phenylethanon, Dimethoxyhydroxyacetophenon, substituierte &squ& -Ketole, wie z. B. 2-Methoxy-2-hydroxypropiophenon, aromatische Sulfonylchloride, wie z. B. 2-Naphthyl sulfonylchlorid, und photoaktive Oxime, wie z. B. 1-Phenyl-1,2-propandion-2-(Oethoxycarbonyl)oxim.

Die oben erwähnten und weitere einsetzbare Photoinititatioren und andere vom Typ Norrish I oder Norrish II können folgende Reste enthalten: Benzophenon-, Acetophenon-, Benzil-, Benzoin-, Hydroxyalkylphenon-, Phenylcyclohexylketon-, Anthrachinon-, Trimethylbenzoylphosphinoxid-, Methylthiophenylmorpholinketon-, Aminoketon-, Azobenzoin-, Thioxanthon-, Hexarylbisimidazol-, Triazin-, oder Fluorenon, wobei jeder dieser Reste zusätzlich mit einem oder mehreren Halogenatomen und/oder einer oder mehreren Alkyloxygruppen und/oder einer oder mehreren Aminogruppen oder Hydroxygruppen substituiert sein kann. Ein repräsentativer Überblick wird von Fouassier: "Photoinititation, Photopolymerization and Photocuring: Fundamentals and Applications", Hanser-Verlag, München 1995, gegeben. Ergänzend kann Carroy et al. in "Chemistry and Technology of UV and EB Formulation for Coatings, Inks and Paints", Oldring (Hrsg.), 1994, SITA, London herangezogen werden.

In einer weiteren bevorzugten Gestaltung des Verfahrens werden die Haftklebemassen mit thermisch aktivierbaren Vernetzern vernetzt. Hierzu werden bevorzugt Metallchelate, bi- oder multifunktionelle Epoxide, bi- oder multifunktionelle Hydroxide sowie bi- oder multifunktionelle Isocyanate beigemischt.

Vorteilhaft ist es weiterhin, wenn die Haftklebemasse vor und / oder während der Transferierung und Verstreckung gezielt temperiert wird, um so beispielsweise Viskosität, Verstreckbarkeit und Relaxation vor der Transferstreckung gezielt beeinflussen zu können. So sollte die Temperatur des Haftkleberfilms unterhalb von 100 °C, bevorzugt unterhalb von 50 °C und besonders bevorzugt unterhalb von 25 °C liegen, um hohe Anisotropie zu erzeugen. Die Temperierung kann dabei durch Wärmeleitung, Konvektion oder Strahlung geschehen. Insbesondere bei Verwendung von Walzen zur Führung des Trennträgers oder als Trennträger selbst, können diese Walzen gezielt temperiert sein.

In einer weiteren vorteilhaften Verfahrensvariante kann die Haftklebemasse (ggf. zusätzlich) nach der Transferierung und Verstreckung vernetzt werden, um den erreichten Orientierungszustand einzufrieren. Die Zeitdauer zwischen Verstreckung und Vernetzung wird bevorzugt kurz gehalten und sollte vorzugsweise nicht mehr als 10 s betragen.

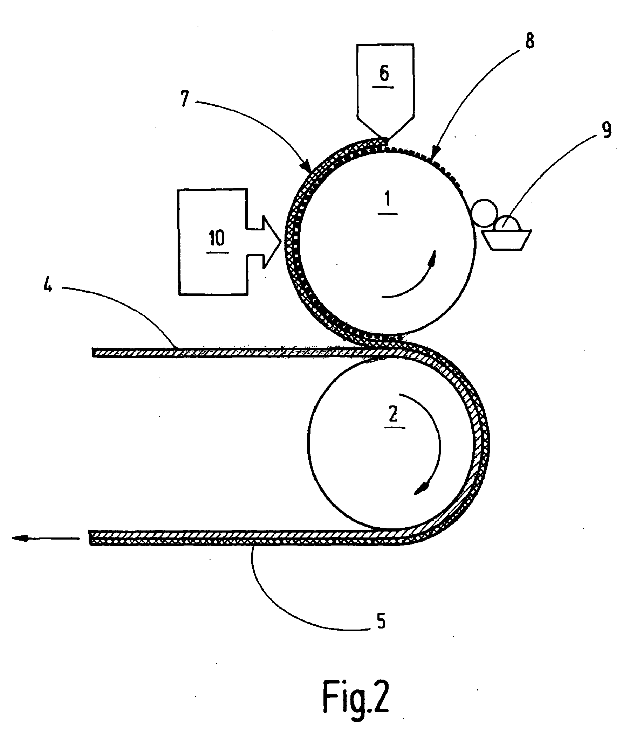

In Fig. 2 ist beispielhaft eine weitere bevorzugte Ausführungsform des Verfahrens gezeigt:

Eine Düse (6) beschichtet einen Haftschmelzklebstoff (7) auf eine Walze (1), die als Glattwalze oder eine strukturierte Walze ausgeführt sein kann. Neben dem Einsatz der hier gezeigten Monodüse (6) können auch Schlitzdüsen oder Mehrkanaldüsen mit zum Beispiel drei oder mehreren Einzelschichten eingesetzt werden. Die Walze (1) ist vorteilhaft als verchromte Stahlwalze mit einer hochglanzpolierten Oberfläche ausgeführt, und zwar mit einer Rautiefe Rz < +/- 1 µm. Ein Fluidfilm (8) wird vorzugsweise über ein gemäß dem Stand der Technik ausgeführtes Walzenauftragswerk (9) gleichmäßig über die Beschichtungsbreite an die Walze (1) vordosiert angetragen. Die mit Fluid (8) beaufschlagte Walze (1) wird mit dem aus der Düse (6) austretenden Klebstofffilm (7) vorzugsweise berührungsfrei beschichtet. Somit stellt hier ein mit einem Fluidfilm ausgerüstetes Maschinenelement (z. B. eine Walze) den erfindungsgemäßen Transportträger dar.

Der auf die Walze (1) schwimmend aufgelegte Klebstofffilm (7) wird unmittelbar auf der Walze (1) mittels einer Strahlungsvorrichtung (10) vernetzt. Die Wahl der Vernetzungstechnologie hängt vom zu vernetzenden Klebstoffsystem ab. Anschließend wird der Klebstofffilm (7) mit Hilfe einer Anlegewalze (2) von der Walze (1) abgenommen. Als den Haftklebstofffilm abnehmendes Substrat (4) wird ein zweites Trägermaterial der Anlegewalze zugeführt und der Klebstofffilm (7) somit auf diesen Träger (das Substrat) (4) übertragen. Durch die die Umfangsgeschwindigkeit der Walze (1) übersteigende Transportgeschwindigkeit des zweiten Trägermaterials (4), die der Umfangsgeschwindigkeit der Anlegewalze (2) entspricht, wird der Klebstofffilm während des Transfers verstreckt

In dieser erfindungsgemäßen Ausführungsvariante wird die bereits durch das Schmelzbeschichtungsverfahren eingebrachte Orientierung zunächst durch die Vernetzung eingefroren und der Haftkleberfilm sodann erfindungsgemäß nach der Vernetzung ein weiteres Mal verstreckt, wodurch der Grad der Anisotropie weiter erhöht werden kann.

In einer weiteren Ausführungsvariante des erfindungsgemäßen Verfahrens wird auf den Transportträger vor dem Transfer- und Verstreckprozess nicht nur eine einzelne Haftkleberschicht aufgebracht, sondern ein mehrlagiger Aufbau, der mindestens eine Haftkleberschicht enthält. Dies umfasst auch einen solchen Aufbau, bei dem die Haftkleberschicht zwischen weiteren Lagen eingebettet ist.

Ebenfalls eine vorteilhafte Ausführungsvariante des erfindungsgemäßen Verfahrens besteht darin, dass das zweite Trägermaterial als mehrlagiger Aufbau ausgeführt ist, der auch bereits eine oder mehrere Haftkleberschichten enthalten kann. Dabei können diese Haftkleberschichten bereits orientiert oder nicht orientiert sein. In einer besonders bevorzugten Ausführung wird die Haftklebemasse zuerst auf die eine Seite und dann auf die andere Seite des zweiten Trägermaterials transferiert und dabei verstreckt. Dieses geschieht bevorzugt in einem Durchlauf des zweiten Trägermaterials durch eine entsprechend dem erfindungsgemäßen Verfahren arbeitende Anlage.

In einer weiteren vorteilhaften Ausgestaltung kann die auf das zweite Trägermaterial transferierte und verstreckte Haftkleberschicht mit einer Eindeckung versehen werden, welche z. B. wiederum aus einem Trennträger aber auch aus einem weiteren, dritten Trägermaterial bestehen kann.

Die erfindungsgemäß hergestellten anisotrop orientierten Haftklebemassen zeigen als Schicht nach Stanz- und/oder Schneidvorgängen eine Rückstellung der Haftklebeschicht an der Schneid- und Stanzkante, welche für das Ausstanzen nicht wieder zusammenfließender Stanzformen hervorragend genutzt werden kann.

Derartige Stanzlinge können als ein- oder doppelseitig klebende Etiketten, zum Verkleben im Haushalt und in der Industrie, besonders im Automobilbau, für alle Montagezwecke, im medizinischen Bereich (Pflaster, Wundabdeckungen) und dergleichen verwendet werden, um nur einige Anwendungsbeispiele zu nennen. Die Stanzlinge sind generell überall dort einsetzbar, wo Klebeetiketten und Klebefolien zur Verwendung kommen. Besonders geeignet sind die Stanzprodukte dort, wo auf einen sauberen, unbeschädigten Rand des Stanzlings Wert gelegt wird.

### Beispiele:

Die Erfindung wird im Folgenden durch Beispiele beschrieben, ohne dass sie darauf beschränkt werden soll.

Folgende Testmethoden wurden angewendet, um die anisotropen Eigenschaften der hergestellten Haftklebemassen zu evaluieren.

### Testmethoden

### Messung des Rückschrumpfes (Test A)

Parallel zur Beschichtungsrichtung des Hotmelts wurden Streifen von min. 20 mm Breite und 20 cm Länge geschnitten. Bei Masseaufträgen von 130 g/m² wurden je 3 Streifen, bei 100 g/m² wurden je 4 Streifen übereinander laminiert, bei 50 g/m² 8 Streifen übereinander laminiert, um vergleichbare Schichtdicken zu erhalten. Der derart erhaltene Körper wurde dann auf exakt 20 mm Breite geschnitten und an den jeweiligen Enden in einem Abstand von 15 cm mit Papierstreifen überklebt. Der auf diese Weise präparierte Prüfkörper wurde dann bei RT vertikal aufgehängt und die Änderung der Länge über die Zeit verfolgt, bis keine weitere Schrumpfung der Probe mehr festgestellt werden konnte. Die um den Endwert reduzierte Ausgangslänge wurde dann bezogen auf die Ausganglänge als Rückschrumpf in Prozent angegeben.

Für die Messung der Orientierung nach längerer Zeit wurden die beschichteten und orientierten Haftklebemassen über einen längeren Zeitraum als Lappenmuster gelagert und anschließend analysiert.

### Bestimmung des Gelanteils (Test B)

Die sorgfältig getrockneten lösungsmittelfreien Klebstoffproben werden in ein Vliestütchen aus Polyethylen (Tyvek-Vlies) eingeschweißt. Aus der Differenz der Probengewichte vor der Extraktion und nach der Extraktion durch Toluol wird der Gelwert bestimmt.

### Herstellung und Untersuchung der Stanzlinge (Test C)

Es wurden Stanzlinge auf handelsüblichen Flach- oder Rotationsstanzen hergestellt. Für die rotativen Stanzversuche wurden Rotationsstanzzylinder von der Firma Rotometrics-Rotationsstanzwerkzeuge GmbH, Mainz-Kastel, eingesetzt.

Für intermittierendes Stanzen (Flach- oder Hubstanze) wurden Stanzwerkzeuge von der Firma Winck-Stanzwerkzeuge, Neuenhaus eingesetzt.

Der Rückschrumpf der Haftklebemasse wurde mikroskopisch beurteilt und quantitativ vermessen. Als Rückschrumpfstrecke L wurde der Abstand von der Folien- und Trennmaterialstanzkante bis zur rückgestellten Haftklebemassenschicht definiert.

### Herstellung der Proben

### Beispiel 1

Ein für radikalische Polymerisationen konventioneller Reaktor wurde mit 8 kg Acrylsäure, 48 kg NTBAM, 8 kg Maleinsäureanhydrid, 368 kg 2-Ethylhexylacrylat, 368 kg n-Butylacrylat und 600 kg Aceton/Isopropanol (97:3) befüllt. Nach 45 Minuten Durchleiten mit Stickstoffgas unter Rühren wurde der Reaktor auf 58°C hochgeheizt und 400 g Vazo 67™ (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 400 g Vazo 67™ (Fa. DuPont) hinzugegeben. Die Reaktion wurde nach 48 h Reaktionszeit abgebrochen und auf Raumtemperatur abgekühlt. Es wurden dann 200 kg Harz Norsolene M1080™ (Fa Cray Valley), 100 kg Harz Foral 85 (Fa. Hercules), 11 kg/h PETIA (Fa. UCB) sowie 1000 kg Siedegrenzbenzin zu der Masselösung zugegeben und darin aufgelöst.

Die Klebemasselösung wurde an einer konventionellen Lösungsmittelbeschichtungsanlage mittels eines Streichbalkens mit einem Masseauftrag von 130 g/m² auf ein Trennpapier mit niedriger Trennkraft (Fa. Lauffenberg) bei einer Geschwindigkeit von 15 m/min in einer Breite von 1100 mm beschichtet und im Trockenkanal mit einem von 60 °C auf 100 °C ansteigenden Temperaturprofil getrocknet. Danach wurde der Haftklebemassefilm in-line mittels Elektronenstrahlen bei einer Beschleunigungsspannung von 180 kV und einer Vorgabedosis von 60 kGy vernetzt. An einer der Vernetzungsstation in-line nachfolgenden Kaschierstation wurde gemäß Fig. 1 eine 12 µm dicke PET-Folie mit einer Geschwindigkeit von 20 m/min zugeführt und der Haftkleberfilm auf diesen transferiert und gleichzeitig verstreckt. Der resultierende Haftkleberfilm hatte eine Dicke von etwa 100 µm. Die Klebemasse wurde vor dem Aufwickeln mit einem doppelseitig silikonisierten Trennpapier abgedeckt.

In einem zweiten Arbeitsgang wurde die freie PET-Folienseite ebenfalls mit einer gemäß der Erfindung verstreckten Klebmasseschicht belegt.

### Beispiel 2

Beispiel 2 entspricht Beispiel 1, es wurde lediglich die PET-Folie durch ein doppelseitig silikonisiertes Trennpapier mit auf der Transferseite hoher Trennkraft (Fa. Lauffenberg) ersetzt. Der zweite Arbeitsgang wurde hier nicht ausgeführt.

### Beispiel 3

Beispiel 3 entspricht Beispiel 2, jedoch wurde der Haftkleberfilm mit einem Masseauftrag von 100 g/m² beschichtet sowie das Trennpapier mit einer Geschwindigkeit von 15 m/min zugeführt, so dass keine Verstreckung während des Transfers auftrat.

### Beispiel 4

Ein für radikalische Polymerisationen konventioneller Reaktor wurde mit 8 kg Acrylsäure, 48 kg NTBAM, 8 kg Maleinsäureanhydrid, 368 kg 2-Ethylhexylacrylat, 368 kg n-Butylacrylat und 600 kg Aceton/Isopropanol (97:3) befüllt. Nach 45 Minuten Durchleiten mit Stickstoffgas unter Rühren wurde der Reaktor auf 58°C hochgeheizt und 400 g Vazo 67™ (Fa. DuPont) hinzugegeben. Anschließend wurde das äußere Heizbad auf 75°C erwärmt und die Reaktion konstant bei dieser Außentemperatur durchgeführt. Nach 1 h Reaktionszeit wurde wiederum 400 g Vazo 67™ (Fa. DuPont) hinzugegeben. Die Reaktion wurde nach 48 h Reaktionszeit abgebrochen und auf Raumtemperatur abgekühlt. Die Klebemasse wurde dann vom Lösungsmittel im Aufkonzentrationsextruder (W&P ZSK 58, L = 40 D) befreit. Das Vakuum der Rückwärtsentgasung betrug 250 mbar, die 3 Vakuumstufen wurden mit 300; 250 und 6 mbar betrieben. Die Eintrittstemperatur der Polymerlösung betrug 110°C. Die Drehzahl wurde auf 185 Umdrehungen pro Minute ein-gestellt, so dass der Extruder dabei mit einer spezifischen Antriebsenergie von 0,12 kWh/kg betrieben wurde. Der Durchsatz lag bei 110 kg/h Speiselösung entsprechend 51 kg/h Konzentrat. Als Austrittstemperatur wurden 117°C gemessen. Der Acrylathotmelt wurde an einen zweiten Doppelschneckenextruder der Fa. Krupp Werner und Pfleiderer (KWP ZSK 40, L = 36 D) weitergeleitet. Die Eintrittstemperatur des Acrylathotmelts betrug 117°C. Im zweiten Extruder wurde das Konzentrat mit 12,6. kg/h Harz Norsolene M1080™ (Fa Cray Valley), 6,3 kg/h Harz Foral 85 (Fa. Hercules) sowie 0,7 kg/h PETIA (Fa. UCB) compoundiert. Der Extruder wurde mit einer Drehzahl von 210 Umdrehungen pro Minute bei einer spezifischen Antriebsenergie von 0,009 kWh/kg betrieben. Der Gesamtdurchsatz lag bei 70 kg/h. Die Austrittstemperatur lag bei 114°C.

Die weitere Verarbeitung der Klebemasse erfolgte wie mit Fig. 2 beschrieben (siehe auch DE 199 059 34). Mit Hilfe eines Einschneckenextruders (L/D:27) wurde der Acrylathaftschmelzklebstoff bei einer Temperatur von 140 °C mit Hilfe einer Monoextrusionsdüse (Fabrikat Breyer), Arbeitsbreite 350 mm, auf eine Glattwalze berührungsfrei beschichtet. Das Fluid, welches die Glattwalze benetzte, war Wasser. Die Temperatur der Glattwalze betrug 35 °C. Der Abstand der Düse zur Walze betrug 4 mm.

Es wurde ein Klebstofffilm bei einer Geschwindigkeit von 15 m/min mit einer Dicke von 130 µm auf die Glattwalze gelegt und unmittelbar auf der Glattwalze bei einer Beschleunigungsspannung von 180 kV und einer Einstelldosis von 80 kGy mittels Elektronenstrahlen vernetzt. Anschließend erfolgte die Transferierung über die bahnführende Anlegewalze auf ein doppelseitig silikonbeschichtetes Trennpapier. Das Trennpapier lief dabei mit einer Bahngeschwindigkeit von 20 m/min. Der resultierende Haftkleberfilm hatte eine Dicke von etwa 100 µm.

### Beispiel 5

Beispiel 5 entspricht Beispiel 4, jedoch wurde der Schmelzhaftkleberfilm mit einem Masseauftrag von 100 g/m² beschichtet sowie das Trennpapier mit einer Geschwindigkeit von 15 m/min zugeführt, so dass keine Verstreckung während des Transfers auftrat.

### Beispiel 6

Beispiel 6 entspricht Beispiel 4, jedoch wurde das Trennpapier durch eine 12 µm dicke PET-Folie ersetzt. Die Klebemasse wurde vor dem Aufwickeln mit einem doppelseitig silikonisierten Trennpapier abgedeckt.

In einem zweiten Arbeitsgang wurde die freie PET-Folienseite ebenfalls mit einer gemäß der Erfindung verstreckten Klebmasseschicht belegt.

### Beispiel 7

Beispiel 7 entspricht Beispiel 5, jedoch wurde das Trennpapier durch eine 12 µm dicke PET-Folie ersetzt. Die Klebemasse wurde vor dem Aufwickeln mit einem doppelseitig silikonisierten Trennpapier abgedeckt.

In einem zweiten Arbeitsgang wurde die freie PET-Folienseite ebenfalls mit einer gemäß der Erfindung verstreckten Klebmasseschicht belegt.

### Resultate

### Gelwerte

Zur Beurteilung der Effizienz der Vernetzung wurde der Gelwert der Klebemassen nach Test B gemessen. Der Gelwert gibt den unlöslichen Anteil der Haftklebemasse in Toluol wider. Die Ergebnisse der Untersuchung sind in Tabelle 1 dargestellt:

**Tabelle 1: Gelwerte**

| **Beispiel** | **1** | **2** | **3** | **4** | **5** | **6** | **7** |
|---|---|---|---|---|---|---|---|
| Gelwert [%] | 42 | 41 | 44 | 50 | 49 | 52 | 49 |

Innerhalb der Beispielgruppen sind die Gelwerte vergleichbar, so dass von gleichwertigen Vernetzungszuständen und gleichartigen Relaxationseigenschaften der Haftklebemassen ausgegangen werden kann.

### Rückschrumpf:

Für die vorteilhafte Anwendung der orientierten Haftklebemassen im Stanzbereich ist der Rückschrumpf ein entscheidender Faktor. Orientierte Klebemassen besitzen die Tendenz, sich nach der Streckung in eine vorgegebene Richtung durch das entropieelastische Verhalten in den Ausgangszustand zurückzubewegen. Zur analytischen Fassung dieser Problematik wurde der Rückschrumpf der orientierten Muster im freien Film nach Test A bestimmt.

Die bei Raumtemperatur ermittelten Werte sind in Tabelle 2 aufgelistet:

**Tabelle 2: Rückschrumpf des freien Films**

| **Beispiel** | **2** | **3** | **4** | **5** |
|---|---|---|---|---|
| Rückschrumpf [%] | 12 | Längung durch Eigengewicht | 71 | 60 |

Die Werte wurden jeweils nach einer Woche Lagerung ermittelt.

### Rückschrumpf am Stanzling

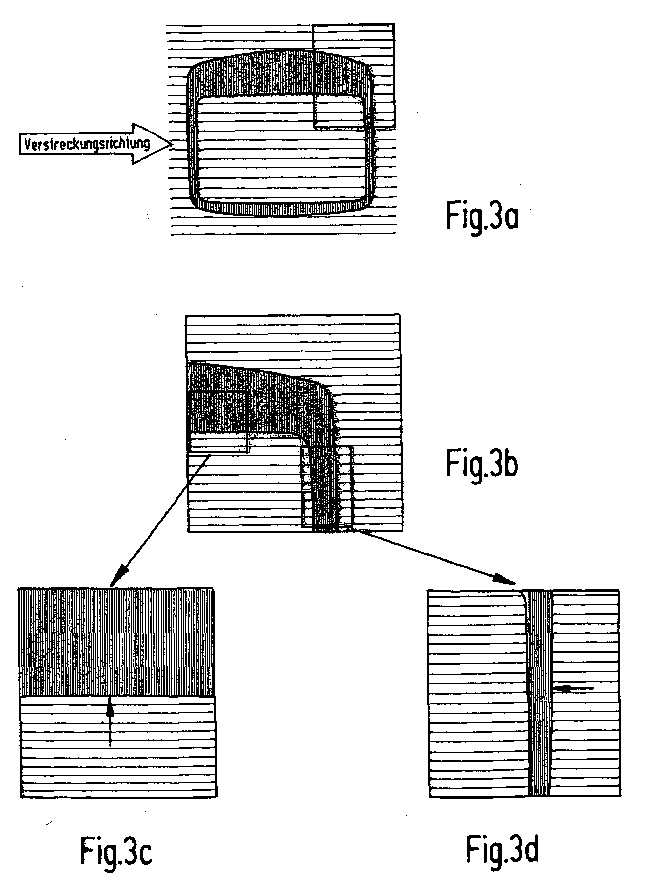

Zur Beurteilung des Rückstellverhaltens der Haftklebemasse im Stanzling wurden aus den Beispielen 1,6 und 7 durch rotatives Stanzen Stanzlinge hergestellt. Fig. 3a zeigt die Stanzlingform, wobei der Pfeil die Verstreckungsrichtung angibt. Das Rückstellverhalten wurde an den Stegen (Stanzkante verläuft quer zur Verstreckungsrichtung) mikroskopisch untersucht. In Fig. 3b ist diese Rückschrumpfmessstelle rechts dargestellt, in Fig. 3c und 3d in Vergrößerung die mikroskopische Aufnahme zur Beurteilung des Steges (längs zur Verstreckungsrichtung).

In Tabelle 3 wird der beobachtete Rückschrumpf der Haftklebemasse in Abhängigkeit von der Zeit und Lagertemperatur nach der Stanzung protokolliert.

**Tabelle 3: Rückschrumpf am Stanzling**

| **Beispiel** | **1** | **6** | **7** |
|---|---|---|---|
| Rückschrumpf nach 1 Tag 23°C [µm] | 10 | 22 | 16 |
| Rückschrumpf nach 7 Tagen 23°C [µm] | 12 | 48 | 26 |
| Rückschrumpf nach 1 Tag 60°C [µm] | 17 | 63 | 29 |
| Rückschrumpf nach 7 Tagen 60°C [µm] | 18 | 65 | - |

Bevorzugt besitzen die Haftklebemassen für die erfinderische Verwendung ein Rückstellverhalten von 10 bis 800 µm, insbesondere von 30 bis 100 µm, gemessen in Verstreckungsrichtung. Durch Temperaturerhöhung kann die Rückstellung beschleunigt werden. Man erreicht bei höherer Temperatur schon nach wenigen Tagen einen nahezu konstanten Endwert.

Das Rückstellverhalten der Haftklebeschicht konnte sowohl bei harzfreien Acrylathotmelts wie auch bei harzabgemischten Acrylathotmelts beobachtet werden. Die Erfindung ist insbesondere für harzabgemischte Acrylathotmelts bedeutend, da diese Systeme aufgrund ihrer inhärenten geringeren Viskosität, im Vergleich zu Reinacrylaten, ein deutlich ausgeprägteres Fließverhalten aufweisen als Reinacrylate.

Auf diese Art lassen sich die positiven Eigenschaften von Hotmelthaftklebmassen für die Verwendung in Stanzprodukten nutzen, ohne dass sich das stärkere Fließverhalten nachteilig auf den Stanzvorgang oder die hergestellten Stanzprodukte auswirkt.

### Bezugszeichenliste

- 1: erste Transferwalze (Beschichtungswalze)
- 2: zweite Transferwalze (Anlegewalze)
- 3: Transportträger mit Haftkleberfilm
- 4: zweites Trägermaterial
- 5: zweites Trägermaterial mit verstrecktem Haftkleberfilm
- 6: Haftklebemassezuführung
- 7: Haftkleberfilm
- 8: Fluidfilm
- 9: Fluidauftragswerk
- 10: Strahlenquelle zur Vernetzung

## Patentansprüche

1. Verfahren zur Herstellung anisotroper Haftklebemassen mittels Beschichtungsverfahren umfassend die Herstellung eines Haftkleberfilms auf einen Transportträger und den anschließenden Transfer des Haftkleberfilms auf ein weiteres Trägermaterial unter gleichzeitigem Verstrecken, wobei die Dehnung mindestens 10% beträgt.

2. Verfahren nach Anspruch 1, **dadurch gekennzeichnet, dass** der Haftkleberfilm aus Lösung, Dispersion oder Emulsion gewonnen wird.

3. Verfahren nach Anspruch 1, **dadurch gekennzeichnet, dass** der Haftkleberfilm lösungsmittelfrei gewonnen wird.

4. Verfahren nach einem der Ansprüche 1 bis 3, **dadurch gekennzeichnet, dass** die Dehnung mehr als 10 %, bevorzugt mehr als 30 %, beträgt.

5. Verfahren nach einem der Ansprüche 1 bis 4, **dadurch gekennzeichnet, dass** die Verstreckung durch Erzeugen einer Geschwindigkeitsdifferenz beim Haftkleberfilmtransfer vom Transportmaterial auf das zweite Trägermaterial erfolgt, wobei die Geschwindigkeit erhöht wird.

6. Verfahren nach einem der Ansprüche 1 bis 5, **dadurch gekennzeichnet, dass** während des Haftkleberfilmtransfers der Transportträger und das zweite Trägermaterial von zwei sich gegenüberliegenden und sich mit unterschiedlichen Geschwindigkeiten bewegenden Oberflächen, vorzugsweise von zwei Walzen, die mit unterschiedlicher Umfangsgeschwindigkeit rotieren, geführt werden, wobei die Geschwindigkeit der zweiten Oberfläche um mindestens 10% erhöht ist.

7. Verfahren nach Anspruch 6, **dadurch gekennzeichnet, dass** der Abstand der genannten Oberflächen mindestens der Summe der Dicken von Transportträger, Haftklebemasse und zweitem Trägermaterial entspricht, vorzugsweise größer ist.

8. Verfahren nach einem der Ansprüche 1 bis 7, **dadurch gekennzeichnet, dass** die Haftklebemasse bereits vor dem Transferieren vernetzt wird.

9. Verfahren nach einem der Ansprüche 1 bis 8, **dadurch gekennzeichnet, dass** die Haftklebemasse nach dem Transferieren und Verstrecken vernetzt wird.

10. Verfahren nach einem der Ansprüche 1 bis 9, **dadurch gekennzeichnet, dass** die Haftklebemasse ein Rückschrumpfverhalten aufweist, das gemäß Rückschrumpfmessung im freien Film mindestens 3 % beträgt, vorzugweise mindestens 30 %.

11. Verfahren nach einem der Ansprüche 1 bis 10, **dadurch gekennzeichnet, dass** als Transportträger ein Trennträger oder ein Maschinenelement dient.

12. Verfahren nach einem der Ansprüche 1 bis 11, **dadurch gekennzeichnet, dass** das weitere zweite Trägermaterial aus der Gruppe der metallischen oder polymeren Trägerfolien, der Papiere, der textilen Flächengebilde oder der Schäume stammt oder ein Trennträger ist.

13. Verfahren nach Anspruch 11 oder 12, **dadurch gekennzeichnet, dass** der Trennträger ein antiadhäsives oder antiadhäsiv ausgerüstetes Papier, ein solches textiles Flächengebilde, eine solche Polymer- oder Metallfolie oder ein Verbund von derartigen Materialien ist.

14. Verfahren nach einem der Ansprüche 11 bis 13, **dadurch gekennzeichnet, dass** der antiadhäsive Effekt des Trennträgers durch eine regelmäßige oder unregelmäßige raue Mikrostruktur der Oberfläche hergestellt oder unterstützt wird.

15. Verfahren nach einem der Ansprüche 11 bis 13, **dadurch gekennzeichnet, dass** der antiadhäsive Effekt durch einen Flüssigkeitsfilm hergestellt oder unterstützt wird.

16. Verfahren nach einem der Ansprüche 11 bis 15, **dadurch gekennzeichnet, dass** der Trennträger mehrfach verwendbar ist, vorzugsweise als endloses Band oder Walze ausgeführt ist.

17. Verfahren nach einem der Ansprüche 1 bis 16, **dadurch gekennzeichnet, dass** auf den Transportträger ein vielschichtiger Lagenaufbau aufgebracht wird, der mindestens eine Haftklebemasse umfasst.

18. Verfahren nach einem der Ansprüche 1 bis 17, **dadurch gekennzeichnet, dass** das weitere Trägermaterial einen vielschichtigen Lagenaufbau aufweist, der gegebenenfalls mindestens eine weitere Haftklebemasse enthalten kann.

19. Verfahren nach einem der Ansprüche 1 bis 18, **dadurch gekennzeichnet, dass** der Haftkleberfilm beidseitig auf das zweite Trägermaterial aufgetragen wird.

20. Verfahren nach einem der Ansprüche 1 bis 19, **dadurch gekennzeichnet, dass** die Haftklebemasse nach dem Transferieren unter gleichzeitigem Verstrecken mit einer Eindeckung versehen wird.

21. Verfahren nach einem der Ansprüche 1 bis 20, **dadurch gekennzeichnet, dass** die Haftklebemasse mindestens ein Basispolymer, das aus der Gruppe der Natur- oder Synthesekautschuke, der Polyester, der Polyurethane, der Acrylate, der olefinischen Polymere oder Copolymere oder der Silikone stammt, umfasst.

22. Verfahren nach Anspruch 21, **dadurch gekennzeichnet, dass** das mindestens eine Basispolymer zumindest teilweise auf mindestens einem Acrylmonomer der allgemeinen Formel (1) basiert, 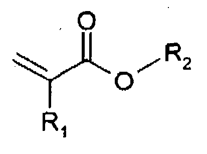 wobei R₁ gleich H oder ein CH₃-Rest ist und R₂ gleich H ist oder aus der Gruppe der gesättigten, unverzweigte oder verzweigten, substituierten oder nicht-substituierten C₁- bis C₃₀-Alkylresten gewählt ist, und das mindestens eine Acrylmonomer einen Massenanteil von mindestens 50 % in der Haftklebemasse aufweist.

23. Verfahren nach einem der Ansprüche 1 bis 20, **dadurch gekennzeichnet, dass** die Haftklebemasse zu bis zu 50 Gew.-% auf Comonomere in Form von Vinylverbindungen basiert, insbesondere auf eine oder mehrere Vinylverbindungen gewählt aus der folgenden Gruppe Vinylester, Vinylhalogenide, Vinylidenhalogenide. Nitrile ethylenisch ungesättigter Kohlenwasserstoffe.

24. Verfahren nach einem der Ansprüche 1 bis 23, **dadurch gekennzeichnet, dass** das mittlere Molekulargewicht der Haftklebemasse größer als 650.000 g/mol ist, ggf. nach Vorbehandlung.

25. Verfahren nach einem der Ansprüche 1 bis 23, **dadurch gekennzeichnet, dass** die Haftklebemassenkomposition zum Zeitpunkt der Beschichtung als zumindest eine Sorte Monomer und/oder zumindest eine Sorte Oligomer und/oder zumindest eine Sorte Polymer mit einem Molekulargewicht unterhalb von 100000 g/mol vorliegt und nach der Beschichtung eine chemische Reaktion stattfindet.

26. Verfahren nach einem der Ansprüche 1 bis 25, **dadurch gekennzeichnet, dass** die Haftklebemasse vor und / oder während der Transferierung und Verstreckung gezielt temperiert wird, bevorzugt, dass die Temperatur der Haftklebemasse unterhalb von 100 °C, besonders bevorzugt unterhalb von 50 ° C und ganz besonders vorteilhaft unterhalb von 25 °C liegt.

## Claims

1. Process for producing anisotropic pressuresensitive adhesives (PSAs) by means of coating methods comprising the production of a PSA film on a transport carrier and the subsequent transfer of the PSA film to a further carrier material with simultaneous stretching, the elongation being at least 10%.

2. Process according to Claim 1, **characterized in that** the PSA film is obtained from solution, dispersion or emulsion.

3. Process according to Claim 1, **characterized in that** the PSA film is obtained solventlessly.

4. Process according to one of Claims 1 to 3,
**characterized in that** the elongation is more than 10%, preferably more than 30%.

5. Process according to one of Claims 1 to 4,
**characterized in that** the stretching is accomplished by generating a difference in speed during PSA film transfer from the transport material to the second carrier material, the speed being increased.

6. Process according to one of Claims 1 to 5,
**characterized in that** during the PSA film transfer the transport carrier and the second carrier material are guided by two opposing surfaces which move at different speeds, preferably by two rolls which rotate with a different peripheral speed, the speed of the second surface being increased by at least 10%.

7. Process according to Claim 6, **characterized in that** the distance between said surfaces corresponds at least to the sum of the thicknesses of transport carrier, PSA and second carrier material, and is preferably greater.

8. Process according to one of Claims 1 to 7,
**characterized in that** the PSA is crosslinked even prior to transfer.

9. Process according to one of Claims 1 to 8,
**characterized in that** the PSA is crosslinked after transfer and stretching.

10. Process according to one of Claims 1 to 9,
**characterized in that** the PSA exhibits shrinkback behaviour which by shrinkback measurement in the free film is at least 3%, preferably at least 30%.

11. Process according to one of Claims 1 to 10,
**characterized in that** said transport carrier is a release carrier or a machine element.

12. Process according to one of Claims 1 to 11,
**characterized in that** the further, second carrier material comes from the group of metallic or polymeric carrier foils, papers, sheetlike textiles or foams or is a release carrier.

13. Process according to Claim 11 or 12, **characterized in that** the release carrier is an antiadhesive or antiadhesively treated paper, sheetlike textile structure or polymer or metal foil or a composite of such antiadhesive or antiadhesively treated materials.

14. Process according to one of Claims 11 to 13, **characterized in that** the antiadhesive effect of the release carrier is produced or supported by a regular or irregular rough surface microstructure.

15. Process according to one of Claims 11 to 13, **characterized in that** the antiadhesive effect is produced or assisted by a film of liquid.

16. Process according to one of Claims 11 to 15, **characterized in that** the release carrier can be used a plurality of times and is configured preferably as a continuous belt or roll.

17. Process according to one of Claims 1 to 16,
**characterized in that** atop the transport carrier a multilayer ply construction is applied which comprises at least one PSA.

18. Process according to one of Claims 1 to 17,
**characterized in that** the further carrier material has a multilayer ply construction which if desired may comprise at least one further PSA.

19. Process according to one of Claims 1 to 18,
**characterized in that** the PSA film is applied on both sides to the second carrier material.

20. Process according to one of Claims 1 to 19,
**characterized in that** the PSA is provided with a cover after transfer with simultaneous stretching.

21. Process according to one of Claims 1 to 20,
**characterized in that** the PSA comprises at least one base polymer which comes from the group of natural or synthetic rubbers, polyesters, polyurethanes, acrylates, olefinic polymers or copolymers or silicones.

22. Process according to Claim 21, **characterized in that** the at least one base polymer is based at least in part on at least one acrylic monomer of the general formula (1) 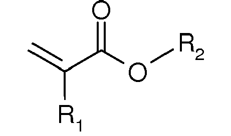 where R₁ is H or a CH₃ radical and R₂ is H or is selected from the group of saturated, unbranched or branched, substituted or unsubstituted C₁- to C₃₀ alkyl radicals and the at least one acrylic monomer has a mass fraction of at least 50% in the PSA.

23. Process according to one of Claims 1 to 20,
**characterized in that** the PSA is based up to 50% by weight on comonomers in the form of vinyl compounds, in particular on one or more vinyl compounds selected from the following group: vinyl esters, vinyl halides, vinylidene halides, nitriles of ethylenically unsaturated hydrocarbons.

24. Process according to one of Claims 1 to 23,
**characterized in that** the average molecular weight of the PSA is greater than 650 000 g/mol, following pretreatment where appropriate.

25. Process according to one of Claims 1 to 23,
**characterized in that** the PSA composition at the time of coating is present in the form of at least one kind of monomer and/or at least one kind of oligomer and/or at least one kind of polymer having a molecular weight below 100 000 g/mol and after the coating operation a chemical reaction takes place.

26. Process according to one of Claims 1 to 25,
**characterized in that** the PSA is purposively temperature-controlled before and/or during transfer and stretching, preferably **in that** the temperature of the PSA is below 100°C, more preferably below 50° C and very preferably below 25°C.

## Revendications

1. Procédé pour la préparation de matières autoadhésives anisotropes au moyen de procédés d'enduction comprenant la production d'un film autoadhésif sur un support de transport et le transfert subséquent du film autoadhésif sur un autre matériau de support avec étirage simultané, l'allongement étant d'au moins 10 %.

2. Procédé selon la revendication 1, **caractérisé en ce que** le film autoadhésif est obtenu à partir d'une solution, dispersion ou émulsion.

3. Procédé selon la revendication 1, **caractérisé en ce que** le film autoadhésif est obtenu sans solvant.

4. Procédé selon l'une quelconque des revendications 1 à 3, **caractérisé en ce que** l'allongement est de plus de 10 %, de préférence de plus de 30 %.

5. Procédé selon l'une quelconque des revendications 1 à 4, **caractérisé en ce que** l'étirage s'effectue par création d'une différence de vitesse lors du transfert du film autoadhésif du matériau de transport sur le deuxième matériau de support, la vitesse étant accrue.

6. Procédé selon l'une quelconque des revendications 1 à 5, **caractérisé en ce que** pendant le transfert du film autoadhésif le support de transport et le deuxième matériau de support sont envoyés de deux surfaces opposées et se mouvant à différentes vitesses, de préférence de deux cylindres tournant à des vitesses périphériques différentes, la vitesse de la deuxième surface étant augmentée d'au moins 10 %.

7. Procédé selon la revendication 6, **caractérisé en ce que** la distance séparant lesdites surfaces correspond à au moins la somme des épaisseurs du support de transport, de la matière autoadhésive et du deuxième matériau de support, de préférence est supérieure à cette somme.

8. Procédé selon l'une quelconque des revendications 1 à 7, **caractérisé en ce que** la matière autoadhésive est réticulée déjà avant le transfert.

9. Procédé selon l'une quelconque des revendications 1 à 8, **caractérisé en ce que** la matière autoadhésive est réticulée après le transfert et l'étirage.

10. Procédé selon l'une quelconque des revendications 1 à 9, **caractérisé en ce que** la matière autoadhésive présente un comportement de retrait qui est d'au moins 3 %, de préférence d'au moins 30 %, selon la mesure du retrait dans le film libre.

11. Procédé selon l'une quelconque des revendications 1 à 10, **caractérisé en ce qu'**on utilise comme support de transport un support séparable ou un élément de machine.

12. Procédé selon l'une quelconque des revendications 1 à 11, **caractérisé en ce que** l'autre second matériau de support est choisi dans le groupe des films de support polymères ou métalliques, des papiers, des objets plans textiles ou des mousses, ou est un support séparable.

13. Procédé selon la revendication 11 ou 12,
**caractérisé en ce que** le support séparable est un papier antiadhésif ou à traitement antiadhésif, un objet plan textile de ce type, un film métallique ou polymère de ce type ou un composite de tels matériaux.

14. Procédé selon l'une quelconque des revendications 11 à 13, **caractérisé en ce que** l'effet antiadhésif du support séparable est produit ou facilité par une microstructure rugueuse, régulière ou irrégulière, de la surface.

15. Procédé selon l'une quelconque des revendications 11 à 13, **caractérisé en ce que** l'effet antiadhésif est produit ou facilité par un film de liquide.

16. Procédé selon l'une quelconque des revendications 1 à 15, **caractérisé en ce que** le support séparable est utilisable plusieurs fois, de préférence est réalisé sous forme de cylindre ou de ruban continu.

17. Procédé selon l'une quelconque des revendications 1 à 16, **caractérisé en ce que** sur le support de transport est appliqué un ensemble de couches multicouche qui comprend au moins une matière autoadhésive.

18. Procédé selon l'une quelconque des revendications 1 à 17, **caractérisé en ce que** l'autre matériau de support présente un ensemble de couches multicouche, qui peut éventuellement contenir au moins une autre matière autoadhésive.

19. Procédé selon l'une quelconque des revendications 1 à 18, **caractérisé en ce que** le film autoadhésif est appliqué des deux côtés sur le deuxième matériau de support.

20. Procédé selon l'une quelconque des revendications 1 à 19, **caractérisé en ce qu'**après le transfert avec étirage simultané, la matière autoadhésive est munie d'un recouvrement.

21. Procédé selon l'une quelconque des revendications 1 à 20, **caractérisé en ce que** la matière autoadhésive comprend au moins un polymère de base qui est choisi dans le groupe des caoutchoucs naturels ou synthétiques, des polyesters, des polyuréthannes, des acrylates, des polymères ou copolymères oléfiniques ou des silicones.

22. Procédé selon la revendication 21, **caractérisé en ce que** ledit au moins un polymère de base est au moins en partie à base d'au moins un monomère acrylique de formule générale (1), 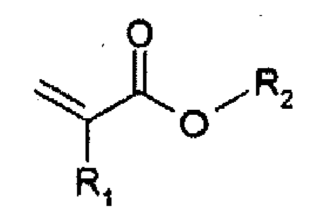 dans laquelle R₁ représente H ou un radical CH₃ et R₂ représente H ou est choisi dans l'ensemble des radicaux alkyle en C₁-C₃₀ saturés, ramifiés ou non ramifiés, substitués ou non substitués, et ledit au moins un monomère acrylique présente une concentration en masse d'au moins 50 % dans la matière autoadhésive.

23. Procédé selon l'une quelconque des revendications 1 à 20, **caractérisé en ce que** la matière autoadhésive est à raison de jusqu'à 50 % en poids à base de comonomères sous forme de composés vinyliques, en particulier à base d'un ou plusieurs composés vinyliques choisis dans le groupe suivant : esters vinyliques, halogénures de vinyle, halogénures de vinylidène, nitriles, hydrocarbures à insaturation éthylénique.

24. Procédé selon l'une quelconque des revendications 1 à 23, **caractérisé en ce que** la masse moléculaire moyenne de la matière autoadhésive est supérieure à 650 000 g/mole, éventuellement après prétraitement.

25. Procédé selon l'une quelconque des revendications 1 à 23, **caractérisé en ce que** la composition de matière autoadhésive au moment de l'enduction se trouve sous forme d'au moins un type de monomère et/ou d'au moins un type d'oligomère et/ou d'au moins un type de polymère ayant une masse moléculaire inférieure à 100 000 g/mole et qu'une réaction chimique a lieu après l'enduction.

26. Procédé selon l'une quelconque des revendications 1 à 25, **caractérisé en ce que** la matière autoadhésive avant et/ou pendant le transfert et l'étirage est traitée thermiquement, de telle sorte que la température de la matière autoadhésive soit de préférence inférieure à 100 °C, de façon particulièrement préférée, inférieure à 50 °C et de façon tout particulièrement préférée, inférieure à 25 °C.
